(19) **Europäisches Patentamt**

**European Patent Office**

**Office européen des brevets**

(11) **EP 0 798 898 B1**

(12) **EUROPEAN PATENT SPECIFICATION**

(45) Date of publication and mention
of the grant of the patent:
**26.07.2006 Bulletin 2006/30**

(51) Int Cl.:
*H04L 12/56* (2006.01)    *H04Q 11/04* (2006.01)

(21) Application number: **97301808.8**

(22) Date of filing: **18.03.1997**

(54) **Bandwidth bidding**

Bieten um Bandbreite

Demande d'allocation de la largeur de bande

(84) Designated Contracting States:
**CH DE ES FI FR IT LI NL SE**

(30) Priority: **29.03.1996 GB 9606708**

(43) Date of publication of application:
**01.10.1997 Bulletin 1997/40**

(73) Proprietor: **SIEMENS PLC**
**Bracknell,**
**Berkshire RG12 8FZ (GB)**

(72) Inventor: **Maffett, Ian**
**London, W13 8ZY (GB)**

(74) Representative: **Payne, Janice Julia**
**Siemens AG,**
**Postfach 22 16 34**
**80506 München (DE)**

(56) References cited:
**EP-A- 0 448 073**        **WO-A-95/34973**

**Description**

A digital link between two switching nodes in a network has a given amount of bandwidth. This bandwidth can be used by calls of different traffic types, e.g, voice, data, video. The type of traffic that can use a particular piece of bandwidth at a given point in time can be controlled in the switching nodes. In a narrowband network the bandwidth of the link is split into fixed size trunks (e.g. 64 or 56 kbit/s per trunk). The allocation of these trunks (or bandwidth in the general case) to traffic types is called bandwidth management.

The present invention covers a method for allocation of bandwidth to traffic types. The method takes into account a number of different criteria for each traffic type that wants to use a particular link, and also looks at the network as a whole to resolve network wide interactions. The method is executed in a central management system and the resulting bandwidth allocation is downloaded to the switching nodes of the network. The nodes are responsible for containing calls of the different traffic types in their allocated bandwidth.

A Bandwidth Manager is intended to control the provision of network bandwidth (principally in a private network). It can be considered as an arbitrator between the network users (the traffic) and the network facilities (switches, leased lines, public network access). It is responsible for accepting requests (which are generally calls) and matching them to appropriate resources.

The most limited network resource is generally the bandwidth linking the sites. This includes both leased lines (which are limited by availability) and public networks (use of which is limited by cost). Clearly, the availability of leased lines is ultimately limited by cost, but from the perspective of a single call they appear to be fixed size resources. Bandwidth management is also closely tied to routing since call routing determines which portions of bandwidths are used for calls. So management of routing is an essential component of bandwidth management.

EP-A-0448073 describes an ATM communication system in which traffic is managed by notifying the terminal equipment of an allocatable bandwidth which can be used in accordance with the amount of traffic in the ATM switching network; and the terminal equipment starting communication in the range of that bandwidth.

According to the present invention there is provided a method of allocating bandwidth to different traffic for use in a telecommunications network having a bandwidth manager and a plurality of switching nodes and links there between, each link having defined bandwidth, the telecommunications network being arranged to transmit one or more different traffic types between a pair of switching nodes and each link having a link manager and each traffic type having a traffic type manager the method being characterised by;

each traffic type manager producing bids for bandwidth for its traffic type according to a common algorithm for the network;

each link manager reconciling the bids for its link and informing the traffic type mangers of the allocated bandwidths;

each traffic type manager being able to change its bids if allocated bandwidth does not fit with the requirements of its calls;

whereupon the bids are resubmitted and the link managers again reconcile the bids;

wherein this process continues until no further changes are made by the traffic manager;

the link managers inform the switching nodes of the new bandwidth allocated to each traffic type on each link; and, the traffic type managers allocate their bandwidth to their individual calls (if required) and inform the calling terminals of their new bandwidth.

The present invention will now be described by way of example, with reference to the accompanying drawings, in which:

Figure 1 illustrates diagrammatically negotiation between traffic type managers and link managers;
Figure 2 illustrates diagrammatically the process of bandwidth bidding;
Figure 3 illustrates an example of the bid calculation function; and
Figure 4 shows a system diagram.

To see how bandwidth can be managed consider a single call. The system (i.e. the bandwidth managed network) can accept the call request or reject it. If the request is accepted then a route must be found for it which has available bandwidth throughout its length. This continuous chain of bandwidth connects the source and the destination. So the Bandwidth Manager's control can be expressed by accepting and rejecting calls and by selecting routes for calls which are accepted. In this way, the use of network bandwidth can be controlled.

Three reasons why the Bandwidth Manager might have to reject a call request are: the necessary bandwidth is not there, the call would be too expensive, or the call would block a more important impending call. So the bandwidth management system must deal with the amount of bandwidth available, the cost of calls and the reservation of bandwidth.

At some level, control must be exercised over every call. However, requiring a management evaluation of each call would create a prohibitive load on the management system and increase call set-up times significantly and in most cases unacceptably so. In addition, there is often very limited information available about each call, but all calls cannot be treated identically. For example, some calls may demand a high quality service (e.g. the Managing Director's calls) while some may not. One solution is to group calls together, according to their characteristics and requirements, into a small number of disjoint groups known as traffic types. So all of the normal voice calls might be grouped together as the traffic type "normal voice", all of these calls would receive the same level of service. Important calls might be grouped together as "high priority voice", and given the best available service (with unrestricted public network access). Other traffic types might be created for FAX and modem traffic, LAN interconnection, video conferencing and voice mail. Each traffic type will have its own service profile, and traffic types can be added as new services are created.

In the context of traffic types the role of bandwidth management is clearer. For each traffic type the Bandwidth Manager should control the amount of bandwidth available and should control access to links and public networks (thereby controlling costs). Bandwidth reservation can also be handled for each traffic type by preventing calls from other traffic types using reserved bandwidth.

The different aspects of bandwidth management mentioned above (leased lines and public networks; bandwidth limiting and access control) can be combined in a system that manages bandwidth availability on every link. Bandwidth management on public network access links allows public network utilisation to be controlled in the same way as leased line usage. Access control corresponds to a zero or non-zero bandwidth limit on a link.

Note that while a great deal of bandwidth management can be carried out on individual links, some aspects of bandwidth management must span the network. For example, every call that uses more than a single link creates an interdependence between the links it uses.

Having considered the scope of bandwidth management as it affects a call, the network resources are considered to show how bandwidth management can be implemented. The implementation most suited to current switching technology is to divide the bandwidth on a link between the various traffic types. Each trunk may be allocated to a particular traffic type (or group of traffic types) so that each call is only allowed to use trunks allocated to its traffic type. In this description 'trunks' will be used as the basic unit of bandwidth, but in general any unit could be used e.g. 1bit/s, 10kbits/, 64 kbit/s.

Cost will be the main factor in limiting the allocated bandwidth when bandwidth is expensive and when the available bandwidth exceeds the likely usage. Much of the available bandwidth may remain unallocated and so unusable because of cost limitations. Naturally, cost is more of a factor on public network access links than it is on leased lines where cost is unaffected by usage.

The enforcing of bandwidth allocations depends on the network switches and protocols. In particular, the sharing of bandwidth between different traffic types (i.e. allocating trunks to a set of traffic types) requires that every call's traffic type be explicitly identified in the call set-up information, and that the switch must be able to act on this information.

The problem of deciding bandwidth allocations can be divided along two dimensions - the links and the traffic types. Each link is attempting to reconcile potentially conflicting demands for bandwidth from each of the traffic types, while each traffic type has to co-ordinate bandwidth across the whole network in response to varying requirements. In practice this division is reflected in the implementation - each link is managed by a *link_manager* managed object, while each traffic type is handled by a *traffic_type_manager* managed object. Potentially, each traffic type could require bandwidth on every link, and so each link could be handling requests from every traffic type.

Decisions that involve mapping a set of alternatives to a single item are most naturally made from the perspective of the single item, by choosing from or combining the set of alternatives. In a link manager - traffic type manager system this means that the link manager decides bandwidth allocations. For each trunk the link manager chooses a traffic type (or set of traffic types) from those that are requesting bandwidth. Conversely, the traffic type managers handle routing, which involves choosing a link (or set of links) to carry a call.

The traffic type managers must provide sufficient information for the link managers to choose between traffic types for each trunk. The final bandwidth allocations can then be returned to the traffic type managers. In addition, the link managers must provide predictions or guarantees of future bandwidth allocations to allow the traffic type managers to choose between links when routing calls.

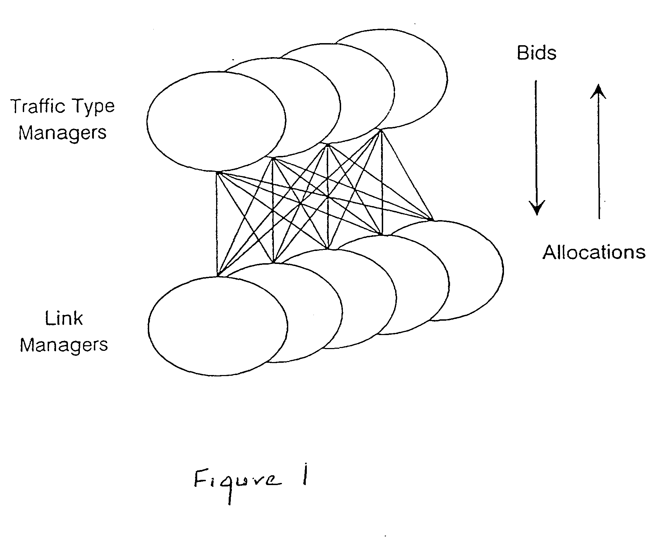

As is illustrated in Figure 1, in the resulting system, each traffic type manager negotiates with each link manager to obtain bandwidth. The link managers decide the bandwidth allocations and notify the traffic type managers if the allocations change. Negotiation for future bandwidth enables the traffic type managers to perform routing.

The traffic type managers calculate their requirements for bandwidth on each link according to a common algorithm which has been established for the network. This requirement is related to the calls of that traffic type which are using the link. The requirement is converted into a set of bids using the bid calculation function (see later) and submitted to the link manager. The reply from the link manager is the actual bandwidth for the traffic type. The traffic type manager must then allocate the given bandwidth to its calls.

A traffic type could consist of unmanaged calls such as voice telephone calls. In this case, the traffic type manager cannot allocate the bandwidth to individual calls as it has no control over the calls. The bandwidth will be used by these calls on a first come, first served basis, and when the bandwidth is all used, calls will fail and have to use an alternative route. The bandwidth requirement may take into account the actual use of the bandwidth by calls by monitoring the statistics from the switching nodes of the actual usage of a link.

A traffic type could consist of managed calls. These are calls which are directly controlled by the management system, i.e. they can be set-up, cleared or their bandwidth can be increased or decreased. In this case, the traffic type manager must allocate the bandwidth for a particular link to the calls using that link. This may mean that the bandwidth of each call may be adjusted or it may mean that a call is cleared down if not enough bandwidth is available. This may change the bandwidth requirements on other links in the network that these calls use. The traffic type manager may then submit new bids. These new bids must comply with the stability requirements discussed later.

These decisions about bandwidth allocations and routing must be consistent with the management policy for the network. The management policy will generally include such things as minimum grade of service for each traffic type, cost constraints and normal handling of congestion and faults. The current management policy should be set explicitly in the link and traffic type managers. The messages exchanged between the link managers and the traffic type managers (i.e. the negotiation protocol) must include enough information to make policy-based decisions. This information will depend on (and determine) the range of policies that can be handled by the system. The form of this information will depend on the method chosen for deciding allocations.

The link managers determine the bandwidth allocations by "auctioning" bandwidth to the traffic type managers. Each traffic manager calculates a set of "bids" for the trunks on each link. These bids are determined using a standard bid-calculation function which is a component of the current management policy. The information passed from a traffic type manager to each link manager is the bids calculated for that link. The link managers allocate bandwidth to the highest bids (see figure 2). This allocation may be subject to other policy-defined constraints (although many constraints can be incorporated into the bid calculation function).

This method of bidding for bandwidth is flexible, and could be used to implement a wide range of policies. The current policy can be changed simply by changing the bid-calculation function or its parameters. Consequently the link managers and the negotiation protocol are unaffected by policy changes or extensions to the policy model.

The actual values of bids must reflect the management policy. For example, bids will depend on whether this will improve the quality of service, whether it will be expensive, whether the call is pre-booked, the importance of the traffic, and other factors as well. In terms of the whole system, a bid is an estimate of the overall benefit (in accordance with current policy) of allocating a trunk on a particular link to a particular traffic type.

A useful simple bid calculation is:

$$\mathrm{Bid} = B_n = C/n$$

i.e. each bid is inversely proportional to the current number of trunks, n. If a number of traffic types compete for bandwidth using this bid calculation function then the number of trunks allocated to each will be proportional to a value C. According to the policy used, C may be related to, for example, each traffic type's relative importance and the number of trunks it requires. These bids can be modified to implement a number of other policies, some examples are given below.

Advance booking can be integrated into the bidding system by modifying the bids for pre-booked calls according to another policy defined function. For example, the bids could be scaled by a fixed factor, where the scaling factor represents the importance given to booking calls (large values for greater importance, unity when advance booking is completely ignored).

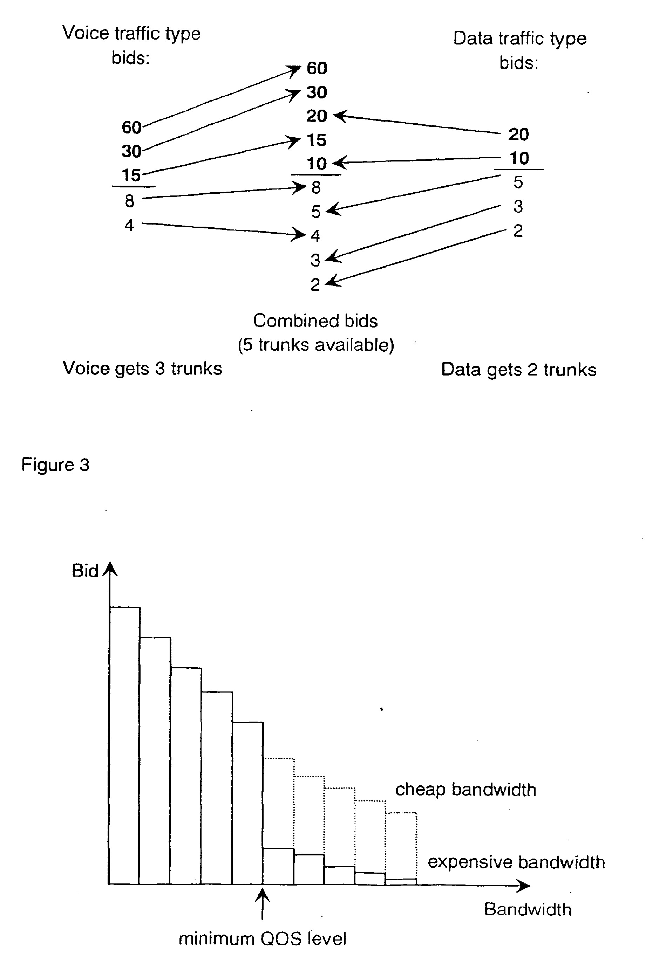

As shown in Figure 3, a minimum allocation for each traffic type can be achieved by increasing the bids for the minimum number of trunks according to another policy defined function.

One approach to limiting call costs is to set a "reserve price" on each link, related to the expense of using bandwidth on that link. Bandwidth is then allocated only to bids higher than the reserve price and only bandwidth that is sufficiently "useful" is allocated. This approach would be suitable for high bandwidth networks, such as ATM-based networks.

It must be noted that a negotiation based system can be unstable since there is an element of feedback (i.e. it can oscillate). This potential for instability can be tackled in one of two ways: the negotiation can be constrained to prevent oscillation, or the feedback can be delayed to limit the possible range of oscillations (and prevent demanding high frequency oscillations).

Where the bidding process is constrained to prevent oscillation, negotiation may be restricted in various ways. Firstly, bids for successive trunks on a link cannot increase, i.e.

$$B_{n+1} <= B_n$$

for every set of bids. This prevents dependence on the previous state of the system, avoiding abrupt lurches between alternative stable states. Also, having smaller bids for higher allocations provides natural damping in the bidding process.

Other constraints affect the way in which traffic type managers can adjust their bids in response to changes in bandwidth. If a traffic type's allocation is increased then the traffic type manager may increase its bids (on any links), but it may not decrease them, i.e.

$$B'_n >= B_n$$

where $B'_n$ is the bid after an increase in allocation. And if a traffic type's allocation is decreased then the traffic type manager may decrease its bids (on any links), but it may not increase them, i.e.

$$B''_n <= B_n$$

where $B''_n$ is the bid after a decrease in allocation. These two rules would ensure that there is no feedback between changing allocations and changing bids, which could cause oscillations.

The system can work in two ways:

1. the traffic type manager can submit a set of bids to the link manager, which replies with the actual bandwidth. The traffic type manager can change and resubmit its bids. The system iterates until there are no changes. The link manager then informs the switching nodes of the new bandwidth allocated to each traffic type on the link and the traffic type manager allocates the given bandwidth to the calls.

2. the traffic type manager submits a set of what-if bids to the link manager, which replies with the actual bandwidth that would be available for that traffic type with that set of bids. The system iterates as above until no changes are made. However the link manager does not inform the switching nodes of this bandwidth allocation and the traffic type manager does not allocate this bandwidth. The traffic type manager uses this method to query what would happen. This can be useful for a user who might be interested to know how much bandwidth could be obtained for a particular call.

To actually allocate the bandwidth, the traffic type manager would have to resubmit the bids as in 1 above and would get the same reply if nothing else had changed in the network.

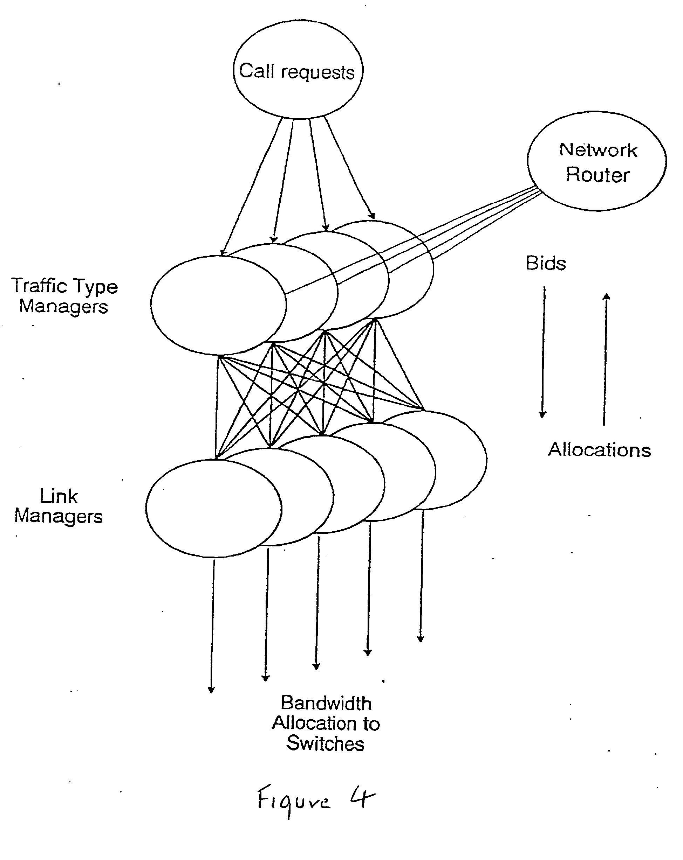

Figure 4 shows how the bandwidth bidding system fits into a system. Call requests are examined to determine which traffic type they belong to and are forwarded to that traffic type manager. The traffic type manager consults the network router to find paths through the network from the source to the destination of the call. These paths are lists of link through which the call could be set-up. The traffic type manager then bids for appropriate bandwidth on the links concerned by sending bids to the link managers. The link managers will resolve the bids and return the bandwidth allocated to each traffic type. The traffic type managers may iterate with new bids. Once the system is stable, the link managers will inform the network switches of the bandwidth allocated to each traffic type on each link, and the traffic type managers will allocate bandwidth between its calls and inform the call request of its success or failure.

**Claims**

1. A method of allocating bandwidth to different traffic for use in a telecommunications network having a bandwidth manager and a plurality of switching nodes and links there between, each link having defined bandwidth, the telecommunications network being arranged to transmit one or more different traffic types between a pair of switching nodes and each link having a link manager and each traffic type having a traffic type manager, the method being **characterised by**;

each traffic type manager producing bids for bandwidth for its traffic type according to a common algorithm for the network;

each link manager reconciling the bids for its link and informing the traffic type mangers of the allocated bandwidths;

each traffic type manager being able to change its bids if allocated bandwidth does not fit with the requirements of its calls;

whereupon the bids are resubmitted and the link managers again reconcile the bids;

wherein this process continues until no further changes are made by the traffic manager;

the link managers inform the switching nodes of the new bandwidth allocated to each traffic type on each link; and,

the traffic type managers allocate their bandwidth to their individual calls, if required, and inform the calling terminals of their new bandwidth.

2. A method as claimed in claim 1 including provision for submitting "what if' bids which provide an indication of the bandwidth allocation which would result, without allocating the bandwidths.

3. A method as claimed in claim 1 or 2 including means for changing the common algorithm.

**Patentansprüche**

1. Verfahren zur Zuteilung von Bandbreite zu verschiedenen Verkehrsarten für die Verwendung in einem Telekommunikationsnetz, welches einen Bandbreiten-Manager sowie eine Mehrzahl von Vermittlungsknoten und Übertragungsstrecken zwischen diesen aufweist, wobei jede Übertragungsstrecke eine definierte Bandbreite besitzt, das Telekommunikationsnetz dafür ausgelegt ist, eine oder mehrere Verkehrsart(en) zwischen einem Paar von Vermittlungsknoten zu übertragen, und jede Übertragungsstrecke einen Übertragungsstrecken-Manager sowie jede Verkehrsart einen Verkehrsart-Manager aufweist, und wobei das Verfahren **dadurch gekennzeichnet ist, dass**:

jeder Verkehrsart-Manager Gebote um Bandbreite für die jeweilige Verkehrsart gemäß einem allgemeinen Algorithmus für das betreffende Netz erzeugt;

jeder Übertragungsstrecken-Manager die verschiedenen Gebote für die von ihm verwaltete Übertragungsstrecke abgleicht und die Verkehrsart-Manager über die zugeteilten Bandbreiten informiert;

jeder Verkehrsart-Manager in der Lage ist, seine Gebote zu ändern, wenn die zugeteilte Bandbreite nicht den Anforderungen der von ihm verwalteten Verbindungen entspricht;

woraufhin die Gebote erneut übermittelt werden und die Übertragungsstrecken-Manager die verschiedenen Gebote erneut abgleichen;

wobei dieser Prozess so lange fortgesetzt wird, bis der Verkehrsart-Manager keine weiteren Änderungen mehr vornimmt;

die Übertragungsstrecken-Manager die Vermittlungsknoten über die jeder Verkehrsart auf jeder Übertragungsstrecke zugeteilte neue Bandbreite informieren; und

die Verkehrsart-Manager ihre Bandbreite den einzelnen von ihnen verwalteten Verbindungen zuteilen, sofern erforderlich, und die rufenden Terminal-Stationen über ihre neue Bandbreite informieren.

**2.** Verfahren gemäß Anspruch 1, welches die Übermittlung von "Was wäre wenn"-Geboten umfasst, die einen Hinweis darauf geben, welche Bandbreite gegebenenfalls zugeteilt würde, ohne dass tatsächlich eine Zuteilung dieser Bandbreiten erfolgt.

**3.** Verfahren gemäß Anspruch 1 oder 2, welches Mittel zum Ändern des allgemeinen Algorithmus beinhaltet.

## Revendications

**1.** Procédé d'attribution de largeur de bande à différents trafics à utiliser dans un réseau de télécommunications comportant un gestionnaire de largeur de bande et une pluralité de noeuds de commutation et de liaisons entre ceux-ci, chaque liaison ayant une largeur de bande définie, le réseau de télécommunications étant agencé pour transmettre un ou plusieurs types de trafic différents entre une paire de noeuds de commutation et chaque liaison comportant un gestionnaire de liaison et chaque type de trafic comportant un gestionnaire de type de trafic, le procédé étant

**caractérisé en ce que** :

chaque gestionnaire de type de trafic produit des soumissions pour de la largeur de bande pour son type de trafic selon un algorithme commun pour le réseau ;

chaque gestionnaire de liaison concilie les soumissions pour sa liaison et informe les gestionnaires de type de trafic des largeurs de bande attribuées ;

chaque gestionnaire de type de trafic est capable de modifier ses soumissions si la largeur de bande attribuée n'est pas adaptée aux besoins de ses appels ;

sur quoi les soumissions sont à nouveau soumises et les gestionnaires de liaison concilient à nouveau les soumissions ;

sachant que ce processus continue jusqu'à ce qu'aucune nouvelle modification soit faite par le gestionnaire de trafic ;

les gestionnaires de liaison informent les noeuds de commutation de la nouvelle largeur de bande attribuée à chaque type de trafic sur chaque liaison, et

les gestionnaires de type de trafic attribuent leur largeur de bande à leurs appels individuels, si nécessaire, et informent les terminaux appelants de leur nouvelle largeur de bande.

**2.** Procédé selon la revendication 1 comprenant la possibilité de soumettre des soumissions « fictives » qui donnent une indication de l'attribution de largeur de bande qui en résulterait, sans attribuer les largeurs de bande.

**3.** Procédé selon la revendication 1 ou 2 comprenant des moyens pour changer l'algorithme commun.

Figure 1

Voice traffic type
bids:

Data traffic type
bids:

60
30
15
8
4

60
30
20
15
10
8
5
4
3
2

20
10
5
3
2

Combined bids
(5 trunks available)

Voice gets 3 trunks

Data gets 2 trunks

Figure 3

minimum QOS level

Call requests

Network
Router

Traffic Type
Managers

Bids

Allocations

Link
Managers

Bandwidth
Allocation to
Switches

Figure 4